# EUROPEAN PATENT SPECIFICATION

(11) **EP 3 273 076 B1**
(45) Date of publication and mention of the grant of the patent: **02.11.2022**
(21) Application number: 16764839.3
(22) Date of filing: 10.03.2016
(51) Int. Cl.: F16C 19/06, F16C 33/58, F16C 33/66, F16N 7/38, F16C 19/16

(54) **BEARING APPARATUS AND MECHANICAL APPARATUS**
LAGERVORRICHTUNG UND MECHANISCHES GERÄT
DISPOSITIF DE PALIER ET APPAREIL MÉCANIQUE

(30) Priority: 17.03.2015 JP 2015053476
(43) Date of publication of application: 24.01.2018
(73) Proprietor: NTN Corporation, Osaka-shi, Osaka 550-0003 (JP)
(72) Inventor: ONDA, Yushi, Kuwana-shi Mie 511-8678 (JP)
(74) Representative: Bockhorni & Brüntjen Partnerschaft Patentanwälte mbB
(86) International application number: PCT/JP2016/057560
(87) International publication number: WO 2016/148009

(56) References cited:
- EP-A1- 1 482 192
- EP-A1- 1 850 019
- WO-A1-2012/053366
- JP-A- 2011 169 362
- JP-A- 2012 072 851
- JP-A- 2013 083 335
- JP-A- 2014 037 878
- JP-A- 2014 062 618

## Description

### TECHNICAL FIELD

The present invention relates to a bearing apparatus and a mechanical apparatus, more particularly, a bearing apparatus and a mechanical apparatus in each of which a lubricating oil supply unit is disposed adjacent to a bearing to supply lubricating oil to inside of the bearing.

### BACKGROUND ART

A rolling bearing apparatus has been conventionally known in which an oil supply unit is incorporated in a rolling bearing (see Japanese Patent Laying-Open No. 2014-37879 (Patent Document 1)). In the bearing apparatus disclosed in Patent Document 1, from a lubricating oil tank disposed in a spacer adjacent to the bearing, the bearing can be supplied with the lubricating oil stably for a long time by operating a pump intermittently.

EP 1 850 019 A1 discloses a rolling bearing including an oil supply unit for supplying lubricating oil stored in a tank by a pump via a nozzle which is made to open in an annular space defined between an inner ring and an outer ring, the nozzle is made to open in a space between an inner circumferential surface of a case and the inner ring, and the inner circumferential surface of the cage is formed into a surface in which an inside diameter of the cage is reduced gradually in a continuous or intermittent fashion from an axial center portion towards at least an end portion lying on a side where the nozzle is inserted, whereby a lubricating oil dropped on to the inner circumferential surface of the cage is caused to flow towards the axial center portion by virtue of centrifugal force generated by the rotation of the cage, so as to prevent the lubricating oil from flowing out to the outside of the bearing unit.

EP 1 482 192 A1 discloses a feed rate of lubricating oil being changed manually or automatically, during the operation of a rolling bearing, in order to maintain the temperature of the bearing in a preset range, wherein the feed rate of lubricating oil is changed, based on sampling data on temperature rise of the rolling bearing according to the rotation speed. An independent claim is included for rolling bearing lubrication device.

### CITATION LIST

### PATENT DOCUMENTS

PTD 1: Japanese Patent Laying-Open No. 2014-37879
EP 1 850 019 A1
EP 1 482 192 A1

### SUMMARY OF INVENTION

### TECHNICAL PROBLEM

In the apparatus disclosed in Patent Document 1, it is considered that the lubricating oil can be supplied for a long time; however, Patent Document 1 does not particularly state: a position via which the lubricating oil is supplied to the inside of the bearing apparatus; a structure for efficiently introducing the lubricating oil supplied to the inside of the bearing apparatus, to a contact portion between a rolling element and each of an inner ring and an outer ring so as to contribute to bearing lubrication; and the like.

The present invention has been made to solve the above problem, and has an object to provide: a bearing apparatus that can be stably operated for a long time with supplied lubricating oil securely contributing to the bearing lubrication; and a mechanical apparatus to which the bearing apparatus is applied.

### SOLUTION TO PROBLEM

A bearing apparatus according to the present invention is defined in claim 1.

A mechanical apparatus according to the present invention is defined in claim 4.

### ADVANTAGEOUS EFFECTS OF INVENTION

According to the description above, there can be provided a bearing apparatus and a mechanical apparatus, each of which can be stably operated for a long time.

### BRIEF DESCRIPTION OF DRAWINGS

Fig. 1 is a schematic side view of a bearing apparatus according to the present embodiment.
Fig. 2 is a schematic cross sectional view along a line segment II-II of Fig. 1.
Fig. 3 is a schematic cross sectional view showing a nozzle member of the bearing apparatus shown in Fig. 2.
Fig. 4 is a schematic cross sectional view of a mechanical apparatus to which the bearing apparatus shown in Fig. 1 is applied.
Fig. 5 is a schematic cross sectional view of the mechanical apparatus shown in Fig. 4.

### DESCRIPTION OF EMBODIMENTS

The following describes an embodiment of the present invention with reference to figures. It should be noted that in the below-mentioned figures, the same or corresponding portions are given the same reference characters and are not described repeatedly.

### <Configuration of Bearing Apparatus>

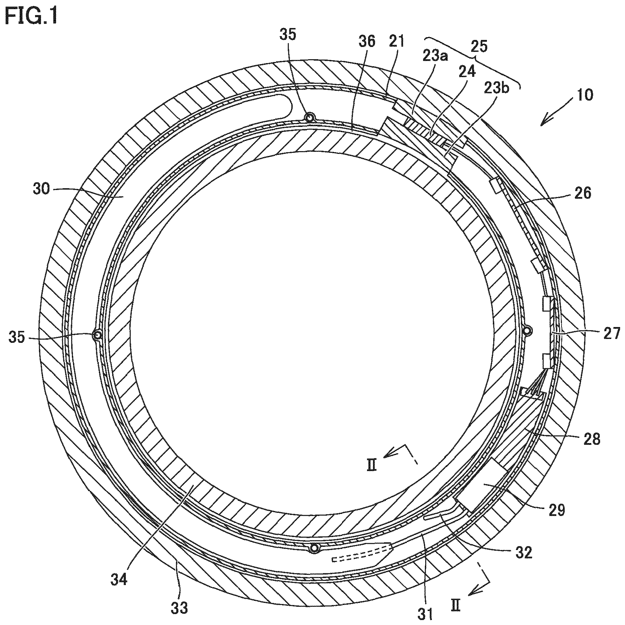

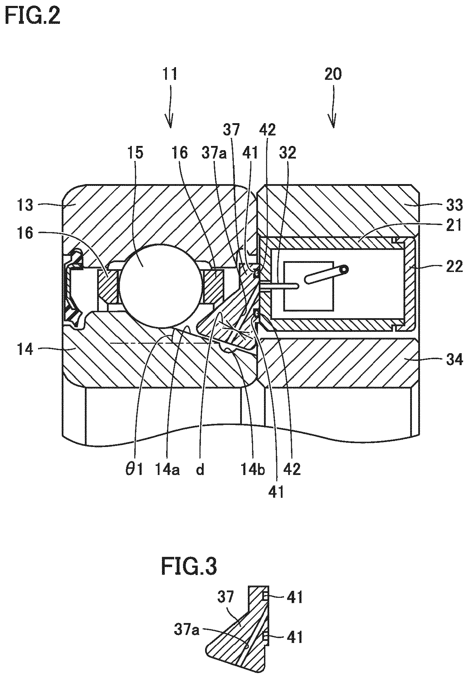

The following describes a bearing apparatus according to the present embodiment with reference to Fig. 1 to Fig. 3. A bearing apparatus 10 according to the present embodiment is a rolling bearing apparatus, and includes a bearing 11 (see Fig. 2), which is a rolling bearing, and a lubricating oil supply unit 20 (see Fig. 2). Lubricating oil supply unit 20 is incorporated between an outer ring spacer 33 and an inner ring spacer 34, each of which is laid against one end of bearing 11 in the axial direction of bearing 11. Bearing apparatus 10 including bearing 11 and lubricating oil supply unit 20 is used in such a state that bearing apparatus 10 is incorporated between rotation shaft and housing of a mechanical apparatus, for example. When bearing apparatus 10 is incorporated in the mechanical apparatus, another spacer may be laid against the other end of bearing 11, for example. In this case, bearing 11 can be positioned in the axial direction by outer ring spacer 33, inner ring spacer 34, and the other spacer.

Bearing 11 mainly includes: an inner ring 14, which is a bearing ring configured to be rotated, for example; an outer ring 13, which is fixed, for example; a plurality of rolling elements 15 located between inner ring 14 and outer ring 13; a cage 16 configured to hold the plurality of rolling elements 15 at a regular interval; and a seal member disposed at the outer circumferential side of cage 16. Examples of bearing 11 include an angular contact ball bearing, a deep groove ball bearing, a cylindrical roller bearing, and the like. A desired grease is sealed in bearing 11 in advance. The seal member is disposed at an end opposite to the side at which outer ring spacer 33 and the like are disposed.

Inner ring 14 of bearing 11 has an outer circumferential surface provided with an inner ring raceway surface that is in contact with rolling element 15. Moreover, the outer circumferential surface includes an inclination portion 14a continuous to the inner ring raceway surface. Inclination portion 14a is inclined relative to the axial direction to become closer to outer ring 13 as inclination portion 14a extends toward the inner ring raceway surface from the end portion of inner ring 14 in the axial direction. An inclination angle θ1 of inclination portion 14a relative to the axial direction is not less than 5° and not more than 45°, for example. The lower limit of inclination angle θ1 may be 10°. Moreover, the upper limit of inclination angle θ1 may be 40° or 35°.

A recess 14b is formed in inclination portion 14a. Recess 14b is a circumferential groove extending in the circumferential direction of bearing 11. Recess 14b has a depth of not less than 0.1 mm and not more than 2 mm, for example. The lower limit of the depth of recess 14b may be 0.2 mm or 0.3 mm. The upper limit of the depth of recess 14b may be 1.8 mm, 1.5 mm, or 1.0 mm. Moreover, the shape of recess 14b in a cross section along the axial direction of bearing 11 may be a semicircular shape or a V-like shape. The shape of recess 14b in the cross section may include a curve or may include a straight line.

A spacer is constructed of inner ring spacer 34 and outer ring spacer 33. Inner ring spacer 34 is laid against one end surface of inner ring 14. Outer ring spacer 33 is laid against one end surface of outer ring 13.

Lubricating oil supply unit 20 mainly includes a power generator 25, a power supply circuit 26, a control circuit 27, a drive circuit 28, a pump 29, and a lubricating oil tank 30, which are disposed in the circumferential direction in an annular housing. Power supply circuit 26 may include a charger. Lubricating oil tank 30 retains the same type of lubricating oil as the base oil of the grease sealed in bearing 11. Power generator 25, power supply circuit 26, control circuit 27, drive circuit 28, pump 29, and lubricating oil tank 30 are disposed side by side in the circumferential direction in a housing main body 21. Power generator 25 is connected to power supply circuit 26. Power supply circuit 26 is connected to control circuit 27. Control circuit 27 is connected to drive circuit 28. Drive circuit 28 is a circuit for operating pump 29 such as a micro pump. A suction tube 31 and a discharge tube 32 are connected to pump 29 connected to drive circuit 28. Suction tube 31 is connected to a pouch of lubricating oil tank 30. Discharge tube 32 is configured to supply the lubricating oil from pump 29 to the inside of bearing 11.

A nozzle member 37 is connected to the tip of discharge tube 32 (end portion opposite to its root portion connected to pump 29) as shown in Fig. 2. Nozzle member 37 is provided with a nozzle hole 37a communicating with discharge tube 32.

Nozzle member 37 is connected to the annular housing of lubricating oil supply unit 20. As shown in Fig. 2, the annular housing of lubricating oil supply unit 20 includes: housing main body 21 that has an open side opposite to bearing 11 and that has a cup-shaped cross section; and a lid body 22 that closes the opening of housing main body 21 and that is attachable/detachable to/from housing main body 21. Nozzle member 37 is connected to a surface of housing main body 21 facing bearing 11. Moreover, nozzle member 37 has a surface that is connected to housing main body 21 and that is provided with an annular sealing groove 41 to surround nozzle hole 37a. A seal member 42 is disposed inside sealing groove 41. Seal member 42 is disposed to prevent the lubricating oil supplied from discharge tube 32 to nozzle hole 37a from being leaked from the connection surface between nozzle member 37 and housing main body 21 to outside.

Nozzle member 37 includes a surface portion facing inclination portion 14a in inner ring 14 of bearing 11. The tip of nozzle hole 37a is an opening formed in the surface portion and is formed to face inclination portion 14a. Moreover, the tip of nozzle hole 37a is disposed at a position facing recess 14b of inclination portion 14a. The position of recess 14b may be a position adjacent to the inner ring raceway surface (for example, a position close to the inner ring raceway surface relative to the axial end portion of cage 16). Moreover, the surface of nozzle member 37 facing inclination portion 14a may extend from the end portion of inner ring 14 to a position adjacent to the inner ring raceway surface (for example, a position close to the inner ring raceway surface relative to the axial end portion of cage 16).

It should be noted that an inner diameter d of the nozzle hole of nozzle member 37 can be appropriately set in accordance with a relation between an amount of discharge and surface tension resulting from viscosity of the base oil. It should be also noted that a distance between the surface of nozzle member 37 facing inclination portion 14a and inclination portion 14a can be set appropriately in consideration of viscosity of the base oil and the like such that the base oil can be facilitated to flow to the rolling element 15 side through a clearance between the surface of nozzle member 37 and inclination portion 14a due to capillarity. The distance can be set at not less than 0.1 mm and not more than 1 mm, for example. The lower limit of the distance may be 0.2 mm or 0.3 mm. The upper limit of the distance may be 0.9 mm, 0.7 mm, or 0.6 mm.

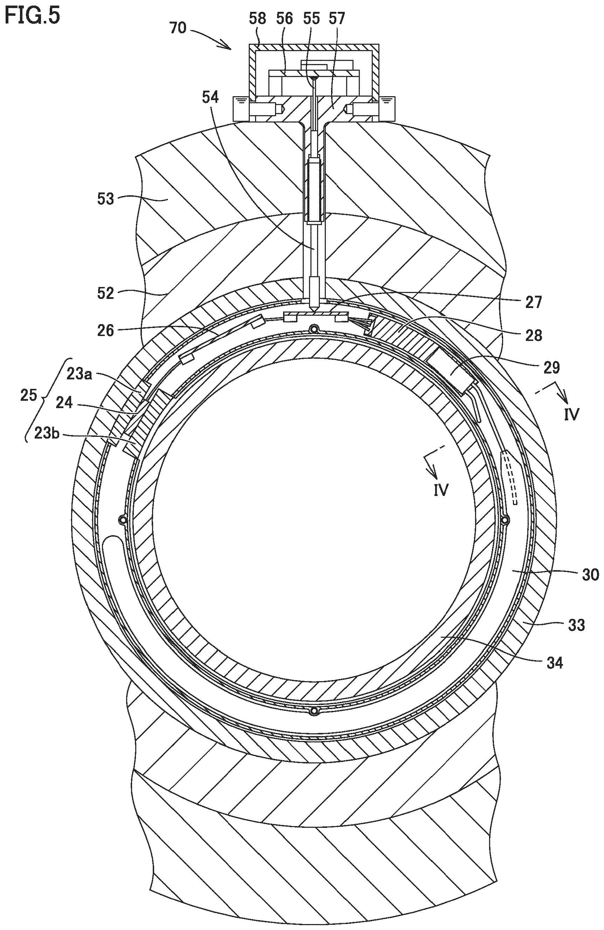

Control circuit 27 shown in Fig. 1 can obtain data regarding a state of supply of the lubricating oil in lubricating oil supply unit 20, and can output the data to outside of control circuit 27 (such as an output board 56 (see Fig. 5) serving as a receiver), for example.

Examples of power generator 25 of lubricating oil supply unit 20 include a power generator configured to generate power through a Seebeck effect. Specifically, power generator 25 includes: a heat conductor 23a connected to outer ring spacer 33; a heat conductor 23b disposed at inner ring spacer 34; and a thermoelectric element 24 (element employing the Seebeck effect of a Peltier device) disposed to connect between heat conductor 23a and heat conductors 23b and closely fixed to heat conductors 23a, 23b.

Here, when a rolling bearing apparatus is used as bearing apparatus 10 as shown in Fig. 2, the temperatures of inner ring 14 and outer ring 13 are increased due to heat of friction with rolling element 15 (see Fig. 2). Normally, outer ring 13 is incorporated in the housing of the apparatus, so that the heat is radiated by heat conduction. Therefore, there occurs a temperature difference between inner ring 14 and outer ring 13 (the temperature of inner ring 14 is higher than the temperature of outer ring 13). Respective heats with the temperatures are conducted to heat conductors 23a, 23b. Heat conductors 23a, 23b are disposed to respectively extend through the inner circumferential surface and outer circumferential surface of housing main body 21. Therefore, there occurs a temperature difference between the both end surfaces of thermoelectric element 24 disposed between heat conductor 23a (heat sink) connected to outer ring 13 with outer ring spacer 33 interposed therebetween and heat conductor 23b located at the inner ring spacer 34 side (inner ring 14 side). Accordingly, in thermoelectric element 24, power can be generated through the Seebeck effect. Since such a power generator 25 is used, it is not necessary to supply power to the lubricating oil supply unit from outside. Hence, no electric wire needs to be attached to a machine tool spindle 50 in order to supply power from outside.

Heat conductor 23a extending through the outer circumferential surface of housing main body 21 has a surface in contact with the inner circumferential surface of outer ring spacer 33. For this surface of heat conductor 23a, an adhesive agent in consideration of heat conductivity is preferably used. It should be noted that the curvature radius of the outer circumferential surface of heat conductor 23a at the outer ring 13 side is preferably substantially the same as the curvature radius of the inner circumferential surface of outer ring spacer 33. This leads to close contact between the inner circumferential surface of outer ring spacer 33 and the outer circumferential surface of heat conductor 23a, whereby heat can be efficiently conducted between heat conductor 23a and each of outer ring spacer 33 and outer ring 13. On the other hand, the inner circumferential surface (surface facing inner ring spacer 34) of heat conductor 23b at the inner ring side is not in contact with inner ring spacer 34. If possible, heat conductor 23a at the outer ring side and heat conductor 23b at the inner ring side desirably have the same volume. Moreover, heat conductor 23b at the inner ring side desirably has a large surface area.

It should be noted that in order to improve heat conductivity and close contact, a heat releasing grease or the like is preferably applied between the inner circumferential surface of outer ring spacer 33 and heat conductor 23a, between heat conductor 23a and thermoelectric element 24, and between thermoelectric element 24 and heat conductor 23b at the inner ring side. Generally, the heat releasing grease is mainly composed of silicone. Moreover, as the material of each of heat conductors 23a, 23b, it is preferable to use a metal having high heat conductivity. For example, silver (Ag), copper (Cu), gold (Au), or the like can be used; however, it is preferable to use copper in view of cost. It should be noted that as the material of each of heat conductors 23a, 23b, a copper alloy mainly composed of copper may be used or a sintered alloy mainly composed of copper may be used. It should be also noted that the heat conductor connected to thermoelectric element 24 may be disposed only at the high temperature side, and thermoelectric element 24 may be closely fixed to the spacer (outer ring spacer 33) at the low temperature side.

Charges generated by power generator 25 are stored in power supply circuit 26. Specifically, the charges are stored in a power storage unit, such as a storage battery or a capacitor, included in power supply circuit 26 (also referred to as "power storage circuit"). A preferable example of the capacitor used herein is an electric double layer capacitor.

Control circuit 27, which is a controller for controlling an operation of pump 29 using drive circuit 28, includes: a program storage having a control program held therein; and an arithmetical unit (microcomputer) connected to the program storage and configured to execute the control program. A time of starting to supply the lubricating oil to bearing 11, a timing (interval) of supply thereof, a time of driving pump 29 to supply the lubricating oil, an amount of supply of the lubricating oil, and the like can be set in advance by control circuit 27. Further, by thus maintaining an appropriate state of supply of the lubricating oil, the lubricating life of the bearing apparatus can be extended.

Drive circuit 28, which serves as a driver, may include any sensor (such as a bearing temperature sensor, a bearing rotation sensor, a lubricating oil remaining amount sensor, a lubricating oil temperature sensor, or the like), for example. A signal from each of these sensors may be sent to an arithmetical unit (microcomputer) of drive circuit 28 so as to automatically control pump 29 in accordance with the temperature and rotation state of bearing 11 to adjust the amount of supply of the lubricating oil.

Pump 29 is controlled by control circuit 27 using drive circuit 28. Pump 29 suctions the lubricating oil from lubricating oil tank 30 via suction tube 31, and supplies the suctioned lubricating oil to the inside of bearing 11 via discharge tube 32 and nozzle hole 37a.

Each of housing main body 21 and lid body 22 included in the annular housing of lubricating oil supply unit 20 may be composed of any material such as a resin material, more preferably, a thermoplastic resin. Examples of the material of the housing include polyphenylene sulfide (PPS) and the like. Moreover, housing main body 21 and lid body 22 may be composed of the same material or may be composed of different materials.

Lid body 22 of the housing may be fixed to housing main body 21 by a screw, which is an exemplary fixation member. By fixing lid body 22 to housing main body 21, the inside of the housing surrounded by housing main body 21 and lid body 22 can be sealed. It should be noted that lid body 22 can be detached by removing the screw from a tap hole 35 into which the screw serving as the fixation member is fixed. In this way, lubricating oil tank 30 contained in housing main body 21 can be supplemented with the lubricating oil without detaching the whole of lubricating oil supply unit 20 from bearing apparatus 10.

The outer circumferential surface of housing main body 21 may be fixed to the inner circumferential surface of outer ring spacer 33. The outer circumferential surface of housing main body 21 may be adhered and fixed to outer ring spacer 33 by, for example, an adhesive agent. Examples of the adhesive agent for adhering and fixing housing main body 21 may include an epoxy resin and the like. It should be noted that housing main body 21 (i.e., lubricating oil supply unit 20) may be fixed to the stationary ring of bearing 11. It should be noted that a clearance 36 may be formed between housing main body 21 and inner ring spacer 34.

Next, lubricating oil tank 30 contained in housing main body 21 may be constituted of a pouch composed of a resin having flexibility. Lubricating oil tank 30 may be disposed in the form of a circular arc along annular housing main body 21.

The resin pouch of lubricating oil tank 30 may be constructed by stacking resin sheets and thermally joining the outer circumferential portions thereof, for example. The outer circumferential portion of lubricating oil tank 30 may be such a thermally joined portion.

The pouch of lubricating oil tank 30 is provided with suction tube 31 connected to pump 29. Suction tube 31 is sandwiched and thermally joined between the resin sheets stacked to form the pouch when forming the pouch of lubricating oil tank 30 by the thermal joining. Thus, suction tube 31 can be in one piece with the pouch.

It should be noted that the pouch of lubricating oil tank 30 can be configured appropriately in a different manner. For example, the pouch may be formed by blow molding. In this case, suction tube 31 can be formed in one piece with the pouch by the blow molding. When the pouch of lubricating oil tank 30 is formed by the blow molding as described above, the pouch has an inflated shape (a shape like a sack). Hence, a portion like a sack is desirably formed to be flat after molding the pouch. By forming the portion like a sack to be flat, the lubricating oil can be fully discharged from lubricating oil tank 30 even when the amount of the lubricating oil becomes small. That is, substantially all the lubricating oil in lubricating oil tank 30 can be used.

The pouch of lubricating oil tank 30 can be composed of any material and is preferably composed of a resin material. Examples of the material of lubricating oil tank 30 include nylon, polyethylene, polyester, polypropylene, and the like. The material of lubricating oil tank 30 is not particularly limited as long as the material has durability against the lubricating oil contained in the pouch.

Suction tube 31 provided at the pouch of lubricating oil tank 30 may be detachably connected to pump 29. Since suction tube 31 is detachable from pump 29, suction tube 31 can be detached from pump 29 and the pouch can be supplemented with the lubricating oil from suction tube 31 when no lubricating oil remains in lubricating oil tank 30.

Moreover, since the pouch of lubricating oil tank 30 is detachable from pump 29, the pouch can be replaced with a prepared spare pouch filled with lubricating oil. For example, when the lubricating oil in lubricating oil tank 30 in use is used up, the used-up pouch of lubricating oil tank 30 is detached and is replaced with the spare pouch (pouch filled with the lubricating oil), thereby supplementing lubricating oil supply unit 20 with the lubricating oil in a short time.

Moreover, the spare pouch may be filled with the lubricating oil under a controlled condition by a lubricating oil manufacturer or the like. This leads to a reduced probability of occurrence of problems during the filling, such as entrance of a foreign matter to the pouch. It should be noted that during storage of the spare pouch, it is preferable to attach a cover to suction tube 31 of the spare pouch. In this way, a foreign matter can be prevented from being introduced into the pouch during the storage of the pouch.

It should be noted that in the above-described bearing apparatus, the inner ring is rotated. Moreover, the center of rotation corresponds to the horizontal axis, but may correspond to the vertical axis.

### <Operation of Bearing Apparatus>

In bearing apparatus 10 including bearing 11 and lubricating oil supply unit 20, the lubricating oil can be supplied from lubricating oil tank 30 to bearing 11 by controlling the operation of pump 29 by control circuit 27.

The lubricating oil supplied to the inside of bearing 11 via nozzle hole 37a of nozzle member 37 is temporarily retained in recess 14b of inclination portion 14a. Then, the lubricating oil flows to the clearance between inclination portion 14a of inner ring 14 and the surface of nozzle member 37 due to centrifugal force resulting from rotation of inner ring 14. Then, due to the centrifugal force (and the capillarity), the lubricating oil flows through the clearance toward the rolling element 15 side. In this way, the lubricating oil supplied to the inside of bearing 11 is supplied to the contact portion between rolling element 15 and each of inner ring 14 and outer ring 13. As a result, lubricity of bearing 11 can be maintained for a long time.

It should be noted that pump 29 can be driven at a timing at which the power generated by power generator 25 is stored in the power storage unit (for example, a capacitor) of power supply circuit 26 and the voltage in the power storage unit reaches a certain voltage. Further, in order to increase the lubricating life of bearing 11 having the grease sealed therein to secure a long time until maintenance is required, pump 29 is desirably driven whenever a predetermined time interval has passed.

For example, when a charging time until the voltage in the power storage unit reaches a voltage required to drive pump 29 (or the power storage unit is fully charged) comes to end at a time earlier than the timing of supplying the required lubricating oil, a predetermined power storage time (delay time) is added after a point of time t1 at which the voltage in the power storage unit has reached the predetermined voltage (i.e., the power storage unit has reached a fully charged state) (i.e., a delay time from the point of time t1 to the point of time t2 is added), with the result that pump 29 is driven using the power stored in the power storage unit at the point of time t2. In this way, the interval of supply of the lubricating oil can be managed to be longer than the time at which the voltage in the power storage unit reaches the predetermined voltage (for example, the fully charged state).

### <Configuration of Mechanical Apparatus>

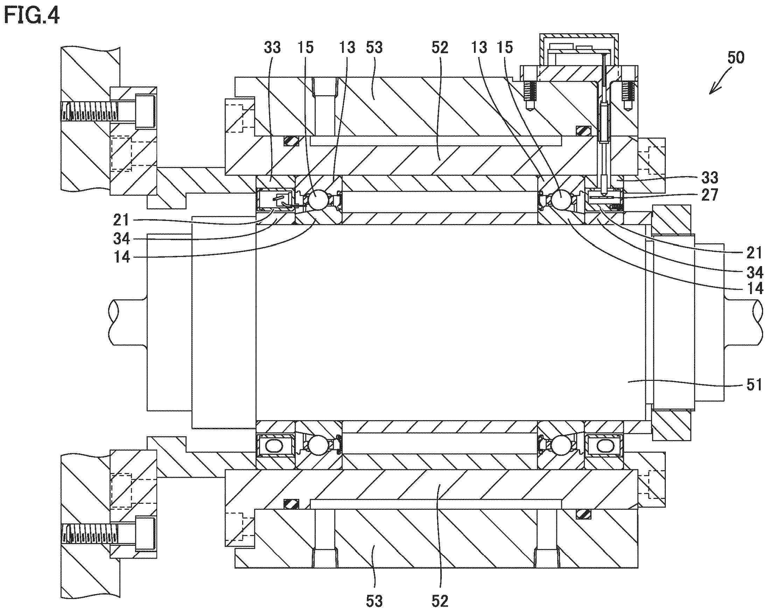

With reference to Fig. 4 and Fig. 5, the following describes a configuration of the machine tool spindle, which is an exemplary mechanical apparatus to which the bearing apparatus according to the present embodiment is applied.

As shown in Fig. 4 and Fig. 5, machine tool spindle 50 according to the present embodiment mainly includes: a rotation shaft 51; a spindle housing 52 disposed to surround rotation shaft 51; an outer circumferential housing 53 disposed at the outer circumference of spindle housing 52; and bearing apparatuses for holding rotation shaft 51 to be rotatable relative to spindle housing 52. Two bearing apparatuses are disposed at the outer circumference of rotation shaft 51. Inner ring 14 and inner ring spacer 34 of the bearing in each of the bearing apparatuses are fixedly engaged with the side surface of rotation shaft 51. Moreover, outer ring 13 and outer ring spacer 33 of the bearing are fixedly engaged with the inner circumferential surface of spindle housing 52. It should be noted that the bearing including inner ring 14, outer ring 13, and rolling elements 15 is an angular contact ball bearing. Each of rolling elements 15 is a ball disposed between inner ring 14 and outer ring 13. Lubricating oil supply unit 20 is disposed between inner ring spacer 34 and outer ring spacer 33 disposed adjacent to the bearing. Moreover, between the two bearings (at the side opposite to the side at which the respective lubricating oil supply units are disposed), another spacer is fixedly engaged with rotation shaft 51 and spindle housing 52 and is laid against inner ring 14 and outer ring 13.

At a region facing control circuit 27 of the lubricating oil supply unit, a through hole is formed to extend through housing main body 21 (see Fig. 2), outer ring spacer 33, spindle housing 52, and outer circumferential housing 53. At the outer circumferential side end of this through hole, a flat portion is provided at the surface of outer circumferential housing 53 and a mount 57 is disposed on the flat portion.

Output board 56 is disposed on mount 57. Output board 56 is electrically connected to control circuit 27 of lubricating oil supply unit 20 by a contact probe 54, for example. Contact probe 54 is disposed inside the above-described through hole. One end of contact probe 54 is in contact with an electrode pad (not shown) of control circuit 27, whereas the other end of contact probe 54 is connected to output board 56 via an electric conduction line 55. Contact probe 54 may be fixedly connected to output board 56. Moreover, output board 56 may be connected to control circuit 27 in the wired manner as described above, or may be connected thereto by other connection means (for example, optical communication means employing a light emitting element and a light receiving element).

A cover member 58 is fixed to mount 57 to cover output board 56 disposed on mount 57. On output board 56, a battery and a storage are disposed. The battery is a power supply for driving a circuit of output board 56. Examples of the battery include a coin type battery and a button type battery. It is desirable to use a lithium battery as the battery. A holder is disposed on a surface of output board 56 to fix such a battery. Meanwhile, for the storage, for example, there can be used: a retention portion (slot) to which a card-shaped external storage medium is fixedly connected; and the external storage medium detachably fixed to the retention portion. Examples of the external storage medium include any conventionally known storage medium such as a memory card.

Cover member 58 is provided with a U-shaped long hole portion (hole into which a fixation bolt can be disposed) to permit detachment thereof from mount 57 only by unfastening the fixation bolt serving as a connection member for mount 57. The above-described battery and external storage medium can be replaced in such a state that cover member 58 is detached from mount 57.

Output board 56 sealed by mount 57 and cover member 58 constitutes a major portion of a voltage monitoring unit. Each of mount 57 and cover member 58 can be provided with an appropriate water-resistant structure in order to prevent entrance of coolant or the like used during machining with the machine spindle. Examples of the water-resistant structure include a packing, an O ring, a caulking, a resin mold, and the like.

Moreover, machine tool spindle 50 includes the lubricating oil supply unit including: a unit main body that is connected to bearing 11 (see Fig. 2) including inner ring 14, outer ring 13, and rolling elements 15 as described above and that includes a controller having control circuit 27 (see Fig. 1); and an external output unit 70 serving as the voltage monitoring unit connected to the controller by the connection line (contact probe 54). The unit main body includes: the controller including control circuit 27; a power supply including power generator 25 (see Fig. 1) and power supply circuit 26 (see Fig. 1); the lubricating oil supplier including power supply circuit 26, drive circuit 28, and pump 29; and the lubricating oil retainer (lubricating oil tank 30). The controller is connected to the power supply and the lubricating oil supplier, controls the state of supply of the lubricating oil in the lubricating oil supplier, and obtains data regarding the state of supply of the lubricating oil. Examples of the data include: data of the timing of supply of the lubricating oil or the interval of supply of the lubricating oil; and data of the voltage (voltage of the stored power) in the power supply circuit (specifically, the power storage unit) when operating pump 29 or the like.

Any configuration can be employed for the configuration of the connection portion between control circuit 27 of the controller and output board 56 of external output unit 70; however, the arithmetical unit (microcomputer) disposed in control circuit 27 may be connected to the arithmetical unit of output board 56 by a connection line. The arithmetical unit of control circuit 27 is connected to the power supply or a ground portion via an interconnection or the like. Moreover, in output board 56, the arithmetical unit is connected to the battery and the storage. From the arithmetical unit to the storage, a signal (signal sent from control circuit 27) indicating data such as voltage can be sent.

According to the above configuration, the storage of output board 56 stores the data regarding the state of supply of the lubricating oil and sent from control circuit 27. This data can be sent from control circuit 27 to output board 56 at any timing; however, the data may be transferred from control circuit 27 to output board 56 when the storage (such as a storage element included in the arithmetical unit or a storage element provided in control circuit 27 independently of the arithmetical unit) of control circuit 27 becomes full of the data, for example. When the data includes time-change data of the voltage of the stored power of the power supply, the data can be stored in an external storage medium via the storage of output board 56 and can be introduced into an external computer or the like using the external storage medium. In this way, the state of the lubricating oil supply unit (such as the state of power generation or the operation state of pump 29) can be checked on the external computer.

### <Operation of Mechanical Apparatus>

In machine tool spindle 50, which is an exemplary mechanical apparatus shown in Fig. 4 and Fig. 5, rotation shaft 51 is connected to a predetermined drive shaft and is rotatable relative to spindle housing 52. Moreover, in the bearing apparatus that supports rotation shaft 51, the lubricating oil supply unit regularly supplies the lubricating oil to bearing 11 (see Fig. 2). Accordingly, reliability and durability of machine tool spindle 50 are improved.

The characteristic configurations of the embodiments of the present invention will be listed, although a part of the configurations may be repeatedly described.

A bearing apparatus 10 according to the present embodiment includes: a bearing 11; and a lubricating oil supply unit 20 connected to bearing 11. Bearing 11 includes: an outer ring 13 having an outer ring raceway surface at an inner circumferential surface of outer ring 13; an inner ring 14 having an inner ring raceway surface at an outer circumferential surface of inner ring 14, inner ring 14 being disposed inwardly of outer ring 13 such that the inner ring raceway surface faces the outer ring raceway surface; and a plurality of rolling elements 15 in contact with the outer ring raceway surface and the inner ring raceway surface, the plurality of rolling elements 15 being arranged side by side on an annular raceway. Lubricating oil supply unit 20 includes: a retainer (lubricating oil tank 30) configured to retain lubricating oil to be supplied to inside of bearing 11; a supplier (drive circuit 28, pump 29, and nozzle member 37) configured to supply the lubricating oil from the retainer to the inside of bearing 11; and a power generator 25 configured to generate power. The supplier is operated using the power generated by power generator 25. The outer circumferential surface of inner ring 14 includes an inclination portion 14a that becomes closer to outer ring 13 as inclination portion 14a extends toward the inner ring raceway surface from an end portion of the outer circumferential surface of inner ring 14 in an axial direction of bearing 11. The supplier is configured to supply the lubricating oil toward inclination portion 14a of inner ring 14.

In this way, the lubricating oil can be supplied to inclination portion 14a and the lubricating oil flows at inclination portion 14a due to centrifugal force caused by the rotation of inner ring 14, thereby supplying the lubricating oil to the contact portion between the inner ring raceway surface and rolling element 15. Thus, the lubricating oil can securely contribute to lubrication between rolling element 15 and each of inner ring 14 and outer ring 13, whereby bearing apparatus 10 can be operated stably for a long time.

In bearing apparatus 10, a recess 14b may be formed in inclination portion 14a and the supplier may supply the lubricating oil toward recess 14b. In this case, the lubricating oil supplied from the supplier is temporarily retained in recess 14b, and then can be supplied securely to the contact portion between the inner ring raceway surface and rolling element 15 along inclination portion 14a. Moreover, since the lubricating oil can be retained in recess 14b, the lubricating oil can be supplied continuously from recess 14b to the contact portion even when the lubricating oil from the supplier is supplied intermittently.

In bearing apparatus 10, recess 14b may have a depth of not less than 0.1 mm and not more than 2 mm. In this case, the lubricating oil supplied from the supplier can be securely retained in recess 14b.

In bearing apparatus 10, an inclination angle θ1 of inclination portion 14a relative to the axial direction of bearing 11 may be not less than 5° and not more than 45°. In this case, the lubricating oil can flow securely along inclination portion 14a due to centrifugal force generated by rotation of inner ring 14. Therefore, the lubricating oil can be supplied securely to the contact portion between the inner ring raceway surface and rolling element 15.

A mechanical apparatus (machine tool spindle 50) according to the present embodiment includes: a rotation shaft 51; a housing (spindle housing 52) disposed at an outer circumferential side of rotation shaft 51; and bearing apparatus 10 described above, bearing apparatus 10 being configured to support rotation shaft 51 to be rotatable relative to the housing. In this way, bearing apparatus 10 can be stably operated for a long time, with the result that the mechanical apparatus can be stably operated for a long time.

Although the embodiments of the present invention have been illustrated, the embodiments described above can be modified in various manners. Further, the scope of the present invention is not limited to the above-described embodiments. The scope of the present invention is defined by the terms of the claims, and is intended to include any modifications within the scope and meaning equivalent to the terms of the claims.

### INDUSTRIAL APPLICABILITY

The present invention is particularly advantageously applied to a bearing apparatus including a lubricating oil supply unit having a power generator, as well as a mechanical apparatus including the bearing apparatus.

### REFERENCE SIGNS LIST

10: bearing apparatus; 11: bearing; 13: outer ring; 14: inner ring; 14a: inclination portion; 14b: recess; 15: rolling element; 16: cage; 20: lubricating oil supply unit; 21: housing main body; 22: cover body; 23a, 23b: heat conductor; 24: thermoelectric element; 25: power generator; 26: power supply circuit; 27: control circuit; 28: drive circuit; 29: pump; 30: lubricating oil tank; 31: suction tube; 32: discharge tube; 33: outer ring spacer; 34: inner ring spacer; 35: tap hole; 36: clearance; 37: nozzle member; 37a: nozzle hole; 41: sealing groove; 42: seal member; 50: machine tool spindle; 51: rotation shaft; 52: spindle housing; 53: outer circumferential housing; 54: contact probe; 55: electric conduction line; 56: output board; 57: mount; 58: cover member; 70: external output unit.

## Claims

1. A bearing apparatus (10) comprising:
a bearing (11);
a lubricating oil supply unit (20) connected to the bearing (11),
the bearing (11) including
an outer ring (13) having an outer ring raceway surface at an inner circumferential surface of the outer ring (13),
an inner ring (14) having an inner ring raceway surface at an outer circumferential surface of the inner ring (14), the inner ring (14) being disposed inwardly of the outer ring (13) such that the inner ring raceway surface faces the outer ring raceway surface, and
a plurality of rolling elements (15) in contact with the outer ring raceway surface and the inner ring raceway surface, the plurality of rolling elements (15) being arranged side by side on an annular raceway,
the lubricating oil supply unit (20) including
a retainer (30) configured to retain lubricating oil to be supplied to inside of the bearing (11),
a supplier (26,28,37) configured to supply the lubricating oil from the retainer to the inside of the bearing (11), and
a power generator (25) configured to generate power,
the supplier being operated using the power generated by the power generator (25),
the outer circumferential surface of the inner ring (14) includes an inclination portion (14a) that becomes closer to the outer ring (13) as the inclination portion (14a) extends toward the inner ring raceway surface from an end portion of the outer circumferential surface of the inner ring (14) in an axial direction of the bearing (11),
the supplier being configured to supply the lubricating oil toward the inclination wherein the supplier includes a nozzle member (37),
wherein the nozzle member (37) is provided with a nozzle hole (37a), communicating with an oil discharge tube (32), and includes a surface portion facing the inclination portion (14a) in the inner ring (14) of the bearing (11), the tip of the nozzle hole (37a) being an opening formed in the surface portion and being formed to face the inclination portion (14a),
**characterized in that**
the nozzle member (37) is connected to an annular housing of the lubricating oil supply unit (20),
wherein the nozzle member (37) has a surface connected to a housing main body (21) of the annular housing,
the surface being provided with an annular sealing groove (41) to surround the nozzle hole (37a),
the surface being connected to a surface of housing main body (21) facing bearing (11) and
wherein a seal member (42) is disposed inside the sealing groove (41).

2. The bearing apparatus (10) according to claim 1, wherein
a recess (14b) is formed in the inclination portion (14a), and
the supplier supplies the lubricating oil toward the recess (14b).

3. The bearing apparatus (10) according to claim 1 or 2, wherein an inclination angle of the inclination portion (14a) relative to the axial direction of the bearing (11) is not less than 5° and not more than 45°.

4. A mechanical apparatus comprising:
a rotation shaft (51);
a housing disposed at an outer circumferential side of the rotation shaft; and
the bearing apparatus (10) recited in any one of claims 1 to 3, the bearing apparatus (10) being configured to support the rotation shaft (51) to be rotatable relative to the housing.

## Patentansprüche

1. Lagervorrichtung (10), umfassend:
ein Lager (11);
eine Schmieröl-Zuführeinheit (20), die mit dem Lager (11) verbunden ist,
wobei das Lager (11) aufweist:
einen Außenring (13) mit einer Außenring-Laufbahnfläche an einer inneren Umfangsfläche des Außenrings (13),
einen Innenring (14) mit einer Innenring-Laufbahnfläche an einer äußeren Umfangsfläche des Innenrings (14), wobei der Innenring (14) innerhalb des Außenrings (13) angeordnet ist, so dass die Innenring-Laufbahnfläche der Außenring-Laufbahnfläche zugewandt ist, und
mehrere Wälzelemente (15), die mit der Außenring-Laufbahnfläche und der Innenring-Laufbahnfläche in Kontakt stehen, wobei die mehreren Wälzelemente (15) auf einer ringförmigen Laufbahn nebeneinander angeordnet sind,
wobei die Schmieröl-Zuführeinheit (20) aufweist:
eine Halteeinrichtung (30), die eingerichtet ist, um Schmieröl zu halten, das dem Inneren des Lagers (11) zuzuführen ist,
eine Zuführeinrichtung (26, 28, 37), die eingerichtet ist, um das Schmieröl von der Halteeinrichtung dem Inneren des Lagers (11) zuzuführen, und
einen Stromgenerator (25), der eingerichtet ist, um Strom zu erzeugen,
wobei die Zuführeinrichtung unter Verwendung des durch den Stromgenerator (25) erzeugten Stroms betrieben ist,
wobei die äußere Umfangsfläche des Innenrings (14) einen Neigungsabschnitt (14a) aufweist, der sich dem Außenring (13) nähert, während sich der Neigungsabschnitt (14a) von einem Endabschnitt der äußeren Umfangsfläche des Innenrings (14) in einer axialen Richtung des Lagers (11) in Richtung der Innenring-Laufbahnfläche erstreckt,
wobei die Zuführeinrichtung eingerichtet ist, um das Schmieröl in Richtung des Neigungsabschnitts (14a) des Innenrings (14) zuzuführen,
wobei die Zuführeinrichtung ein Düsenelement (37) aufweist,
wobei das Düsenelement (37) mit einem Düsenloch (37a) vorgesehen ist, das mit einer Ölauslassröhre (32) kommuniziert, und einen Flächenabschnitt aufweist, der dem Neigungsabschnitt (14a) in dem Innenring (14) des Lagers (11) zugewandt ist, wobei das Ende des Düsenlochs (37a) eine Öffnung ist, die in dem Flächenabschnitt gebildet ist und die gebildet ist, so dass sie dem Neigungsabschnitt (14a) zugewandt ist,
**dadurch gekennzeichnet, dass**
das Düsenelement (37) mit einem ringförmigen Gehäuse der Schmieröl-Zuführeinheit (20) verbunden ist,
wobei das Düsenelement (37) eine Fläche aufweist, die mit einem Gehäuse-Hauptkörper (21) des ringförmigen Gehäuses verbunden ist,
wobei die Fläche mit einer ringförmigen Dichtungsnut (41) vorgesehen ist, um das Düsenloch (37a) zu umgeben,
wobei die Fläche mit einer Fläche des Gehäuse-Hauptkörpers (21) verbunden ist, die dem Lager (11) zugewandt ist, und
wobei ein Dichtungselement (42) im Inneren der Dichtungsnut (41) angeordnet ist.

2. Lagervorrichtung (10) nach Anspruch 1, wobei
eine Vertiefung (14b) in dem Neigungsabschnitt (14a) gebildet ist und
die Zuführeinrichtung das Schmieröl in Richtung der Vertiefung (14b) zuführt.

3. Lagervorrichtung (10) nach Anspruch 1 oder 2, wobei ein Neigungswinkel des Neigungsabschnitts (14a) relativ zu der axialen Richtung des Lagers (11) nicht weniger als 5° und nicht mehr als 45° beträgt.

4. Mechanische Vorrichtung, umfassend:
eine Drehwelle (51);
ein Gehäuse, das an einer äußeren Umfangsseite der Drehwelle angeordnet ist; und
die Lagervorrichtung (10) nach einem der Ansprüche 1 bis 3, wobei die Lagervorrichtung (10) eingerichtet ist, um die Drehwelle (51) zu tragen, die relativ zu dem Gehäuse drehbar ist.

## Revendications

1. Dispositif de palier (10) comprenant :
un palier (11) ;
une unité d'alimentation en huile de lubrification (20) reliée au palier (11),
le palier (11) comprenant :
une bague extérieure (13) comportant une surface de chemin de roulement de bague extérieure au niveau d'une surface circonférentielle intérieure de la bague extérieure (13),
une bague intérieure (14) comportant une surface de chemin de roulement de bague intérieure au niveau d'une surface circonférentielle extérieure de la bague intérieure (14), la bague intérieure (14) étant disposée vers l'intérieur de la bague extérieure (13) de sorte que la surface de chemin de roulement de bague intérieure fait face à la surface de chemin de roulement de bague extérieure, et
une pluralité d'éléments roulants (15) en contact avec la surface de chemin de roulement de bague extérieure et la surface de chemin de roulement de bague intérieure, la pluralité d'éléments roulants (15) étant disposés côte à côte sur un chemin de roulement annulaire,
l'unité d'alimentation en huile de lubrification (20) comprenant
un dispositif de retenue (30) configuré pour retenir l'huile de lubrification devant être fournie à l'intérieur du palier (11),
un dispositif d'alimentation (26, 28, 37) configuré pour fournir l'huile lubrification à partir du dispositif de retenue à l'intérieur du palier (11), et
un générateur d'énergie (25) configuré pour générer de l'énergie,
le dispositif d'alimentation fonctionnant en utilisant l'énergie générée par le générateur d'énergie (25),
la surface circonférentielle extérieure de la bague intérieure (14) comprend une partie d'inclinaison (14a) qui se rapproche de la bague extérieure (13) à mesure que la partie d'inclinaison (14a) s'étend vers la surface de chemin de roulement de bague intérieure à partir d'une partie d'extrémité de la surface circonférentielle extérieure de la bague intérieure (14) dans une direction axiale du palier (11),
le dispositif d'alimentation étant configuré pour fournir l'huile de lubrification vers la partie d'inclinaison (14a) de la bague intérieure (14),
dans lequel le dispositif d'alimentation comprend un élément de buse (37),
dans lequel l'élément de buse (37) est pourvu d'un trou de buse (37a), communiquant avec un tube de décharge d'huile (32), et comprend une partie de surface faisant face à la partie d'inclinaison (14a) dans la bague intérieure (14) du palier (11), la pointe du trou de buse (37a) étant une ouverture formée dans la partie de surface et étant formée pour faire face à la partie d'inclinaison (14a),
**caractérisé en ce que**
l'élément de buse (37) est relié à un logement annulaire de l'unité d'alimentation en huile de lubrification (20),
dans lequel l'élément de buse (37) a une surface reliée à un corps principal de logement (21) du logement annulaire,
la surface étant pourvue d'une rainure d'étanchéité annulaire (41) pour entourer le trou de buse (37a),
la surface étant reliée à une surface du corps principal de logement (21) faisant face au palier (11) et
dans lequel un élément d'étanchéité (42) est disposé à l'intérieur de la rainure d'étanchéité (41).

2. Dispositif de palier (10) selon la revendication 1, dans lequel
un évidement (14b) est formé dans la partie d'inclinaison (14a), et
le dispositif d'alimentation fournit l'huile de lubrification vers l'évidement (14b).

3. Dispositif de palier (10) selon la revendication 1 ou 2, dans lequel un angle d'inclinaison de la partie d'inclinaison (14a) par rapport à la direction axiale du palier (11) n'est pas inférieur à 5° et pas supérieur à 45°.

4. Dispositif mécanique comprenant :
un arbre de rotation (51) ;
un logement disposé sur un côté circonférentiel extérieur de l'arbre de rotation ; et
le dispositif de palier (10) décrit dans l'une quelconque des revendications 1 à 3, le dispositif de palier (10) étant configuré pour supporter l'arbre de rotation (51) afin qu'il puisse tourner par rapport au logement.
